# EUROPÄISCHE PATENTSCHRIFT

(11) **EP 2 701 949 B1**
(45) Veröffentlichungstag und Bekanntmachung des Hinweises auf die Patenterteilung: **24.12.2014**
(21) Anmeldenummer: 12723597.6
(22) Anmeldetag: 19.04.2012
(51) Int. Cl.: B60Q 1/38, H05B 33/08, F21S 8/10, B60Q 1/28

(54) **ANSTEUERVORRICHTUNG FÜR EINE BELEUCHTUNGSEINRICHTUNG EINES KRAFTFAHRZEUGS UND KRAFTFAHRZEUG**
ACTUATION APPARATUS FOR A LIGHTING DEVICE OF A MOTOR VEHICLE AND MOTOR VEHICLE
DISPOSITIF D'ACTIVATION POUR UN DISPOSITIF D'ÉCLAIRAGE D'UN VÉHICULE AUTOMOBILE ET VÉHICULE AUTOMOBILE

(30) Priorität: 26.04.2011 DE 102011018573
(43) Veröffentlichungstag der Anmeldung: 05.03.2014
(73) Patentinhaber: Audi AG, 85045 Ingolstadt (DE)
(72) Erfinder: BAIER, Thomas, 85049 Ingolstadt (DE); BERLITZ, Stephan, 86529 Schrobenhausen (DE)
(74) Vertreter: Thielmann, Frank
(86) Internationale Anmeldenummer: PCT/EP2012/001697
(87) Internationale Veröffentlichungsnummer: WO 2012/146360

(56) Entgegenhaltungen:
- EP-A1- 2 161 494
- EP-A1- 2 270 389
- WO-A1-2007/093938
- DE-A1-102008 030 365
- DE-A1-102008 060 042

## Beschreibung

Die Erfindung betrifft eine Ansteuervorrichtung für eine Beleuchtungseinrichtung eines Kraftfahrzeugs, welche wenigstens eine einem Fahrtrichtungsanzeiger zugeordnete LED und wenigstens eine einer weiteren Lichtart, insbesondere einem Tagfahrlicht und/oder einem Positionslicht, zugeordnete LED und eine gemeinsame Optikanordnung für die Lichtarten umfasst.

Bezüglich der Beleuchtung in modernen Kraftfahrzeugen wurde vorgeschlagen, verschiedene Lichtarten zu vereinen. Entsprechend wurde vorgeschlagen, für ein Tagfahrlicht und/oder Positionslicht gemeinsam mit einem Fahrtrichtungsanzeiger (Blinklicht) eine gemeinsame Optik vorzusehen, so dass diese Lichtarten - also der Fahrtrichtungsanzeiger und das Tagfahrlicht und/oder Positionslicht (Standlicht) - für den äußeren Betrachter am selben Ort erscheint. Dies ist möglich, nachdem das Tagfahrlicht bzw. das Positionslicht nicht gleichzeitig mit dem Fahrtrichtungsanzeiger verwendet werden. Üblicherweise werden dann die LEDs, die dem Fahrtrichtungsanzeiger zugeordnet sind, und die LEDs, die dem Tagfahrlicht und/oder Positionslicht zugeordnet sind, hinter der gemeinsamen Optik angeordnet und auch von einer gemeinsamen Ansteuervorrichtung, die die nötige Betriebsspannung für die gerade zu betreibende Lichtart bereitstellt, angesteuert. Eine solche Ansteuervorrichtung kann auch als LED-Treibermodul bezeichnet werden.

Die bekannte Ansteuervorrichtung weist dabei einen Gleichspannungswandler (DC/DC-Wandler) für das Tagfahrlicht und/oder Positionslicht und einen Gleichspannungswandler für den Fahrtrichtungsanzeiger auf. Dabei ist jeder Lichtart ein Gleichspannungswandler fest zugeordnet. Diese Lösung ist teuer und aufwendig.

EP 2 161 494 A1 betrifft eine Beleuchtungseinrichtung für ein Kraftfahrzeug mit einer Vielzahl von Leuchtmitteln, wobei den Leuchtmitteln verschiedenartige Lichtfunktionen in der Beleuchtungseinrichtung zugeordnet sind. Ein Lichtleitkörper soll so ausgestaltet sein, dass Licht verschiedenartiger Lichtfunktion gemeinsam in den Lichtleitkörper eingekoppelt werden kann, wobei die verschiedenartigen Lichtfunktionen über eine Lichtaustrittsfläche des Lichtleitkörpers zur Verfügung gestellt werden. Die Leuchtmittel können dabei LEDs sein, wobei ferner eine elektronische Ansteuereinheit vorgesehen sein kann, die die Leuchtmittel mit verschiedenen Lichtfunktionen gemeinsam ansteuert.

DE 10 2008 060 042 A1 betrifft ein Verfahren zur Ansteuerung einer Beleuchtungseinheit, eine Beleuchtungseinheit und eine Beleuchtungseinrichtung für ein Fahrzeug. Es wird eine Mehrzahl von Leuchtdioden-Lichtquellen verwendet, die in einer gemeinsamen Licht abstrahlenden Lichtquellenmatrix zusammengefasst sind. Um eine gewünschte Lichtverteilung zur Umsetzung von verschiedenen Lichtfunktionen einzustellen, werden die einzelnen LED-Lichtquellen von einem Lichtsteuergerät individuell angesteuert, wobei zur Umsetzung der verschiedenen Lichtfunktion die einzelnen LED-Lichtquellen zu Ketten zusammengefasst werden, die jeweils von einer Wandlereinheit mit Energie versorgt werden.

Der Erfindung liegt daher die Aufgabe zugrunde, eine Ansteuervorrichtung dahingehend zu verbessern, dass sie weniger aufwendig und kostengünstiger hergestellt werden kann.

Zur Lösung dieser Aufgabe ist bei einer Ansteuervorrichtung der eingangs genannten Art erfindungsgemäß vorgesehen, dass die Ansteuervorrichtung einen einzigen, sowohl für die LEDs des Fahrtrichtungsanzeigers als auch für die LEDs einer weiteren Lichtart genutzten Gleichspannungswandler sowie eine Steuereinheit zur Ansteuerung des Gleichspannungswandlers in Abhängigkeit eines Steuersignals umfasst, wobei sie zwei jeweils einer Lichtart zugeordnete Versorgungseingänge und zwei jeweils einer Lichtart zugeordnete Betriebsausgänge sowie zwei durch die Steuereinheit ansteuerbare Schaltmittel aufweist, über die der Gleichspannungswandler wahlweise mit jeweils einem Versorgungseingang und einem Betriebsausgang einer Lichtart verbindbar ist.

Dem liegt die Erkenntnis zugrunde, dass die Lichtarten Tagfahrlicht und/oder Positionslicht und Fahrtrichtungsanzeiger niemals gleichzeitig in Betrieb sind, so dass die gewollte Funktionalität auch mit einem einzigen Gleichspannungswandler erreicht werden kann. Auf diese Weise wird ein Gleichspannungswandler eingespart, so dass es auch zu einer Einsparung von Kosten und Gewicht kommt. Damit das korrekte Ausgangssignal für die LEDs erhalten wird, wird der Gleichspannungswandler über eine Steuereinheit, insbesondere einen Mikrocontroller, entsprechend angesteuert. Dabei sei an dieser Stelle noch angemerkt, dass für die Realisierung des Tagfahrlichts und des Positionslichts mit denselben LEDs auch vorgesehen sein kann, die LEDs des Tagfahrlichts und Positionslichts pulsweitenmoduliert anzusteuern, wobei das Positionslicht beispielsweise mit 6 - 10 % Tastgrad realisiert werden kann, während das Tagfahrlicht beispielsweise 100 % Tastgrad entsprechen kann. Auch dies kann gesteuert über die Steuereinheit erfolgen.

Die Ansteuervorrichtung weist zwei jeweils einer Lichtart zugeordnete Versorgungseingänge und zwei jeweils einer Lichtart zugeordnete Betriebsausgänge sowie zwei durch die Steuereinheit ansteuerbare Schaltmittel auf, über die der Gleichspannungswandler wahlweise mit jeweils einem Versorgungseingang und jeweils einem Betriebsausgang einer Lichtart verbindbar ist. Es werden also entsprechende Schalter eingesetzt, um den Eingang und den Ausgang des Gleichspannungswandlers korrekt zu verbinden. Auch diese Schaltmittel werden von der Steuereinheit, insbesondere in Abhängigkeit des Steuersignals, korrekt angesteuert.

Weiterhin kann vorgesehen sein, dass der Gleichspannungswandler für einen Betrieb bei wenigstens zwei Regelströmen ausgebildet ist. Üblicherweise weist der Gleichspannungswandler selber bereits eine entsprechende Regelschaltung auf, der lediglich noch mitgeteilt werden muss, bei welchem Strom die gerade zu betreibenden LEDs betrieben werden sollen. Diese Information kann in der Steuereinheit hinterlegt werden oder über das Steuersignal mit übermittelt werden, so dass eine entsprechende Einstellung des Gleichspannungswandlers möglich ist, beispielsweise, wenn der Gleichspannungswandler bei 50 mA und 700 mA betrieben werden soll. Die Steuereinheit, insbesondere der Mikrocontroller, wählt dann den gerade zu verwendenden Strom für den internen Regelkreis des Gleichspannungswandlers aus.

Daneben betrifft die Erfindung auch ein Kraftfahrzeug, umfassend eine erfindungsgemäße Ansteuervorrichtung, die Beleuchtungseinrichtung sowie ein Beleuchtungssteuergerät. Das Beleuchtungssteuergerät kann dabei über eine Steuerleitung mit der Ansteuervorrichtung verbunden sein, so dass das Steuersignal von dem Beleuchtungssteuergerät an die Ansteuervorrichtung übermittelt werden kann. Sämtliche Ausführungen bezüglich der Ansteuervorrichtung lassen sich analog auf das erfindungsgemäße Kraftfahrzeug übertragen, so dass auch hier die Vorteile der Erfindung erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug, und
- Fig. 2: eine Prinzipskizze der Ansteuervorrichtung und der Beleuchtungseinrichtung.

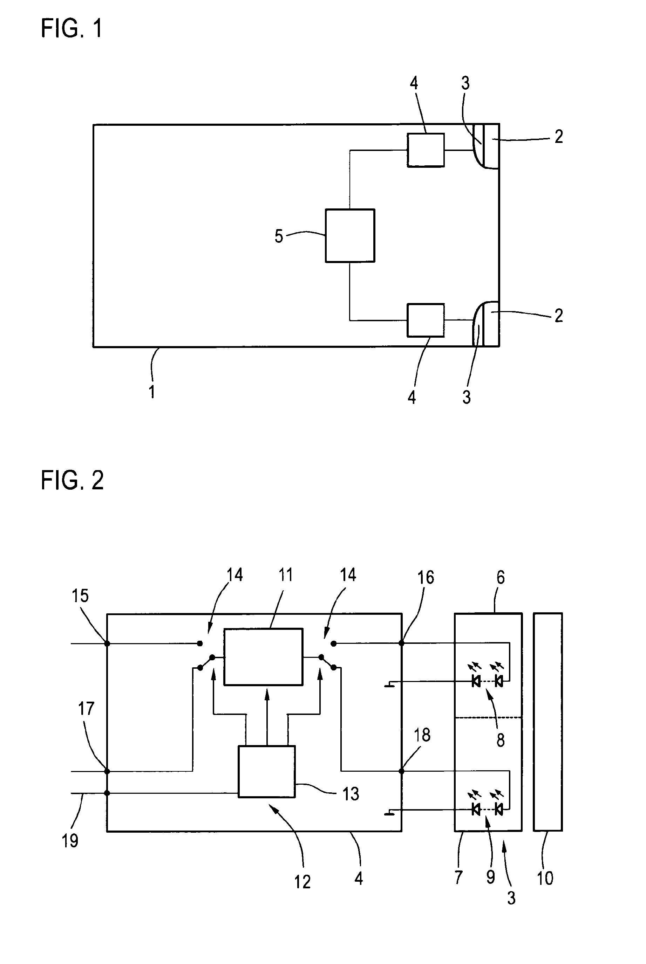

Fig. 1 zeigt eine Prinzipskizze eines erfindungsgemäßen Kraftfahrzeugs 1. Es umfasst zwei Scheinwerfer 2, in denen jeweils eine Beleuchtungseinrichtung 3 integriert ist, die den Lichtarten "Fahrtrichtungsanzeiger" und "Tagfahrlicht/Positionslicht" zugeordnet ist. Nachdem zur Erzeugung beider Lichtarten LEDs verwendet werden, ist beiden Beleuchtungseinrichtungen 3 eine Ansteuervorrichtung 4 zugeordnet, die beispielsweise unmittelbar an der Beleuchtungseinrichtung 3 verbaut sein kann. Die Ansteuervorrichtung 4 stellt die nötigen Betriebsspannungen für den Betrieb der LEDs der Beleuchtungseinrichtungen 3 zu Verfügung. Gesteuert wird der Betrieb der Beleuchtung mittels eines Beleuchtungssteuergeräts 5.

Fig. 2 zeigt nun genauer die Struktur der Beleuchtungseinrichtung 3 und der Ansteuervorrichtung 4. Ersichtlich weist die Beleuchtungseinrichtung 3 zwei LED-Module 6, 7 auf, wobei das LED-Modul 6 die LEDs 8 für das Tagfahrlicht/Positionslicht enthält. Das LED-Modul 7 enthält die LEDs 9 für den Fahrtrichtungsanzeiger. Beiden LED-Modulen 6, 7 ist eine gemeinsame Optik 10 zugeordnet, die das jeweilige Licht der LED-Module 6, 7 an derselben Stelle im Scheinwerfer 2 erscheinen lässt.

Nachdem das Tagfahrlicht/Positionslicht und der Fahrtrichtungsanzeiger nie gleichzeitig aktiv sind, weist die Ansteuervorrichtung 4 nur einen einzigen Gleichspannungswandler 11 auf, der über eine Steuereinheit 12, hier einen Mikrocontroller 13, ansteuerbar ist. Über ebenso durch die Steuereinheit 12 ansteuerbare Schaltmittel 14 kann der Gleichspannungswandler 11 entweder mit einem Versorgungseingang 15 und einem Betriebsausgang 16, die dem Tagfahrlicht/Positionslicht zugeordnet sind, verbunden werden, oder mit einem Versorgungseingang 17 und einem Betriebsausgang 18, die dem Fahrtrichtungsanzeiger zugeordnet sind. Dabei ist der Gleichspannungswandler 11 in diesem Ausführungsbeispiel für einen Betrieb bei zwei Regelströmen ausgebildet, nämlich einem Regelstrom von 500 mA für den Fahrtrichtungsanzeiger und einem Regelstrom von 700 mA für das Tagfahrlicht/Positionslicht.

Die zur Ansteuerung der Schaltmittel 14 und des Gleichspannungswandlers 11 nötigen Informationen werden der Steuereinheit 12 dabei über ein Steuersignal, das über eine Steuerleitung 19 von dem Beleuchtungssteuergerät 5 erhalten wird, zugeführt.

## Patentansprüche

1. Ansteuervorrichtung (4) für eine Beleuchtungseinrichtung (3) eines Kraftfahrzeugs (1), welche wenigstens eine einem Fahrtrichtungsanzeiger zugeordnete LED und wenigstens eine einer weiteren Lichtart, insbesondere einem Tagfahrlicht und/oder einem Positionslicht, zugeordnete LED und eine gemeinsame Optikanordnung (10) für die Lichtarten umfasst,
**dadurch gekennzeichnet,**
**dass** die Ansteuervorrichtung (4) einen einzigen, sowohl für die LEDs des Fahrtrichtungsanzeigers als auch für die LEDs der weiteren Lichtart genutzten Gleichspannungswandler (11) sowie eine Steuereinheit (12) zur Ansteuerung des Gleichspannungswandlers (11) in Abhängigkeit eines Steuersignals umfasst, wobei sie zwei jeweils einer Lichtart zugeordnete Versorgungseingänge (15, 17) und zwei jeweils einer Lichtart zugeordnete Betriebsausgänge (16, 18) sowie zwei durch die Steuereinheit (12) ansteuerbare Schaltmittel (14) aufweist, über die der Gleichspannungswandler (11) wahlweise mit jeweils einem Versorgungseingang (15, 17) und einem Betriebsausgang (16, 18) einer Lichtart verbindbar ist.

2. Ansteuervorrichtung nach Anspruch 1,
**dadurch gekennzeichnet,**
**dass** der Gleichspannungswandler (11) für einen Betrieb bei wenigstens zwei Regelströmen ausgebildet ist.

3. Ansteuervorrichtung (4) nach einem der vorangehenden Ansprüche,
**dadurch gekennzeichnet,**
**dass** die Steuereinheit (12) ein Mikrocontroller (13) ist.

4. Kraftfahrzeug (1), umfassend eine Ansteuervorrichtung (4) nach einem der vorangehenden Ansprüche, die Beleuchtungseinrichtung (3) sowie ein Beleuchtungssteuergerät (5).

## Claims

1. Actuating device (4) for a lighting device (3) of a motor vehicle (1) which comprises at least one LED associated with a driving direction indicator and at least one LED associated with another type of light, particularly a daytime driving light and/or a position light, and a common optical arrangement (10) for the types of light,
**characterised in that**
the actuating device (4) comprises a single DC-DC converter (11) used both for the LEDs of the driving direction indicator and for the LEDs of the other type of light, and a control unit (12) for controlling the DC-DC converter (11) in response to a control signal, said actuating device comprising two supply inputs (15, 17), each associated with one respective type of light, and two operating outputs (16, 18), each associated with one respective type of light, and two switching means (14) which can be actuated by the control unit (12) for selectively connecting the DC-DC converter (11) with a respective supply input (15, 17) and a respective operating output (16, 18) of one type of light.

2. Actuating device according to claim 1,
**characterised in that**
the DC-DC converter (11) is configured for operation with at least two regulating currents.

3. Actuating device (4) according to one of the preceding claims,
**characterised in that**
the control unit (12) is a microcontroller (13).

4. Motor vehicle (1) comprising an actuating device (4) according to one of the preceding claims, the lighting device (3) and a lighting control apparatus (5).

## Revendications

1. Dispositif de commande (4) pour un dispositif d'éclairage (3) d'un véhicule automobile (1), lequel dispositif d'éclairage comprend au moins une LED associée à un feu clignotant indicateur de changement de direction et au moins une LED associée à un autre type de feu, notamment un feu de circulation de jour et/ou un feu de position, ainsi qu'un dispositif optique commun (10) pour les types de feux, **caractérisé en ce que** le dispositif de commande (4) comprend un seul convertisseur de tension continue (11) utilisé aussi bien pour les LED du feu clignotant indicateurs de changement de direction que pour les LED de l'autre type de feu ainsi qu'une unité de commande (12) pour commander le convertisseur de tension continue (11) en fonction d'un signal de commande, le dispositif de commande comportant deux entrées d'alimentation (15, 17) associées chacune à un type de feu et deux sorties de fonctionnement (16, 18) associées chacune à un type de feu ainsi que deux commutateurs (14) qui peuvent être commandés par l'unité de commande (12) et par l'intermédiaire desquels le convertisseur de tension continue (11) peut être relié sélectivement à chaque fois à une entrée d'alimentation (15, 17) et à une sortie de fonctionnement (16, 18) d'un type de feu.

2. Dispositif de commande selon la revendication 1, **caractérisé en ce que** le convertisseur de tension continue (11) est conçu pour un fonctionnement avec au moins deux courants de réglage.

3. Dispositif de commande (4) selon l'une des revendications précédentes, **caractérisé en ce que** l'unité de commande (12) est un microcontrôleur (13).

4. Véhicule automobile (1), comprenant un dispositif de commande (4) selon l'une des revendications précédentes, le dispositif d'éclairage (3) ainsi qu'un appareil de commande d'éclairage (5).
